# EUROPEAN PATENT SPECIFICATION

(11) **EP 1 450 424 B1**
(45) Date of publication and mention of the grant of the patent: **05.12.2007**
(21) Application number: 04002945.6
(22) Date of filing: 10.02.2004
(51) Int. Cl.: H01M 4/96

(54) **Electrode paste composition**
Elektrodenpastenzusammensetzung
Composition de pâte d'électrode

(30) Priority: 20.02.2003 JP 2003042967
(43) Date of publication of application: 25.08.2004
(73) Proprietor: JSR Corporation, Tokyo (JP); HONDA MOTOR CO., LTD., Tokyo (JP)
(72) Inventor: Higami, Makoto, Tokyo (JP); Kawai, Junji, Tokyo (JP); Fukuda, Kaoru, Wako-shi Saitama (JP); Matsuo, Junji, Wako-shi Saitama (JP); Takahashi, Ryoichiro, Wako-shi Saitama (JP); Hama, Yuichiro, Wako-shi Saitama (JP)
(74) Representative: Böhm, Brigitte

(56) References cited:
- EP-A- 0 622 861
- WO-A-02/03489
- US-A- 5 723 173
- US-A- 5 783 325
- US-A1- 2001 024 748
- US-A1- 2002 182 478

## Description

### FIELD OF THE INVENTION

The present invention relates to a paste composition for making electrode layers of fuel cells and the like.

### BACKGROUND ART

Electrode layers used in fuel cells are produced by applying a paste composition that contains carbon supporting a hydrogen reduction catalyst, on carbon paper and heat treating the resultant coating.

Traditional paste compositions for the making of electrodes are nonuniform and therefore have storage instability. Addition of dispersant improves the storage stability, but it also results in a paste composition that gives an electrode layer in which the carbon supporting a catalyst metal and the electrolyte have so a close relation that the pore volume is insufficient. As a consequence, the fuel and oxygen gases cannot contact with the catalyst adequately and the resulting water causes flooding and like problems. Therefore, the fuel cells having such electrode layers cannot exhibit high generating performance.

EP 0 622 861 A1 discloses an electrode layer of an ionexchange membrane which is formed by printing an ink of catalytically active particles on the surface of the membrane. The electrode ink comprises:
(a) catalytically active particles;
(b) a hydrocarbon having at least one ether, epoxy or ketone linkage and an alcohol group, preferably 1-methoxy 2-propanol, and
(c) optionally a binder, preferably perfluorinated sulfonyl fluoride polymer or perfluorinated sulfonic acid polymer.

US 2002/0182478 A1 discloses a polymer electrolyte fuel cell comprising a hydrogen ion-conductive polymer electrolyte membrane and a pair of electrodes having catalyst layers sandwiching said hydrogen ion-conductive polymer electrolyte membrane between them and gas diffusion layers in contact with said catalyst layers, wherein at least the catalyst layer of one of said electrodes comprises carbon particles supporting a noble metal catalyst. The carbon particles include at least two kinds of carbon particles adsorbing a hydrogen ion-conductive polymer electrolyte in mutually different dispersed states.

EP 1 304 753 A1 also discloses a polymer electrolyte fuel cell including a hydrogen ion-conductive polymer electrode membrane, a pair of electrodes composed of catalyst layers sandwiching the hydrogen ion-conductive polymer electrolyte membrane between them and gas diffusion layers in contact with the catalyst layers.

US 5,783,325 discloses an electrocatalytic gas diffusion electrode for fuel cells and a process for its preparation. The electrode comprises an anisotropic gas diffusion layer that is made of a porous carbon matrix through which carbon particles and poly(vinylidene) fluoride are distributed. The electrode further contains a catalytic layer that is made of a coagulated ink suspension containing metal catalyst loaded carbon particles and a thermoplastic polymer.

US 5,723,173 discloses a method for manufacturing a solid polymer electrolyte fuel cell, comprising the steps of dispersing a carbon powder supporting a noble metal catalyst in an organic solvent to obtain a dispersion, mixing the resulting dispersion with an alcoholic solution of a solid polymer electrolyte to produce a colloid of the solid polymer electrolyte and simultaneously to obtain a mixed solution in which said colloid is adsorbed to the carbon powder, applying the mixed solution on one side of a gas-diffusion layer to produce an electrode, and pressing the resulting electrode on at least one side of a solid polymer electrolyte membrane to integrate them.

US 2001/024748 A1 discloses a further production method for an electrode catalyst solution for a solid polymer fuel cell.

The present inventors earnestly studied with a view to solving those prior-art problems. As a result, they have developed an electrode paste composition which, while being excellent in storage stability, can give electrodes that have a sufficient pore volume for high generating performance. The electrode paste composition comprises organic solvents of a specific boiling point to make it possible for the solvent of the paste composition to evaporate at a controlled rate under drying conditions in the electrode production. The present invention has been completed based on this finding.

### OBJECT OF THE INVENTION

It is an object of the invention to provide an electrode paste composition that has excellent storage stability and can allow for a sufficient pore volume in the resultant electrode for high generating performance.

### SUMMARY OF THE INVENTION

To achieve the aforesaid object, the invention provides the following:
(1) A paste composition for making electrodes, comprising 1 to 20 wt.% of a carbon black supporting a hydrogen reduction catalyst, 1 to 30 wt.-% of an electrolyte, 1 to 50 wt.-% of an organic solvent with a boiling point of 100 to 200°C, and 30 to 80 wt.-% of a water-soluble organic solvent with a boiling point of less than 100°C.
(2) The paste composition as described in (1), wherein the organic solvent with a boiling point of 100 to 200°C has a solubility parameter of 7.5 to 13 (cal/mol)^{1/2} and is other than hydrocarbon and halogenated hydrocarbon solvents.
(3) The paste composition as described in (1) or (2), further containing a dispersant.
(4) The paste composition as described in any one of (1) to (3), further containing a carbon fiber.
(5) The paste composition as described in any one of (1) to (4), further containing water.
(6) The paste composition as described in (4), wherein the carbon fiber is contained in the amount of 1 to 10 wt.-%.

### BEST MODE FOR CARRYING OUT THE INVENTION

Hereinbelow, the present invention will be described in more detail.

The paste composition for making electrodes according to the invention comprises a carbon black supporting a hydrogen reduction catalyst, an electrolyte, an organic solvent with a boiling point of 100 to 200°C, and a water-soluble organic solvent with a boiling point of less than 100°C. It can optionally contain at least one additional component selected from a dispersant, a carbon fiber and water.

Each component used in the paste composition will be discussed first.

### (Hydrogen reduction catalyst)

The hydrogen reduction catalyst for use in the invention is preferably a noble metal catalyst, such as platinum, palladium, gold, ruthenium or iridium. The noble metal catalyst may contain two or more elements like alloys or mixtures.

### (Carbon black)

For use as the carrier carbon black for the aforesaid hydrogen reduction catalyst, oil furnace blacks, channel blacks, lamp blacks, thermal blacks, acetylene blacks and the like are preferable due to their good electron conductivities and large specific surface areas.

The oil furnace blacks include those carbon blacks commercially available under the trademarks of VULCAN XC-72, VULCAN P, BLACK PEARLS 880, BLACK PEARLS 1100, BLACK PEARLS 1300, BLACK PEARLS 2000, REGAL 400 (all available from Cabot Corporation), KETJENBLACK EC (available from Lion Corporation), and product Nos. 3150 and 3250 of Mitsubishi Chemical Corporation. The acetylene blacks include DENKA BLACK^{™} (available from Denki Kagaku Kogyo K.K.).

Furthermore, natural graphites, pitches, cokes, carbon, and synthetic graphites obtained from organic compounds such as polyacrylonitriles, phenolic resins and furan resins, may also be used.

These carbon blacks may be in the form of particles or fibers.

### (Electrolyte)

The electrolyte for use in the invention is preferably a polymer having proton exchange groups for enhancing the proton conductivity through the catalyst layer. The proton exchange groups in the polymer include sulfonic groups, carboxylic groups and phosphoric groups, but are not particularly limited thereto. Although the polymer with such proton exchange groups may be selected without limitation, a proton-exchange polymer composed of a fluoroalkyl main chain and a fluoroalkyl ether side chain, or a sulfonated polyarylene may be preferably employed. Moreover, fluorine-containing polymers, ethylene or styrene polymers, copolymers and blends thereof that contain the proton exchange groups are also available.

### (Organic solvent with a boiling point of 100 to 200°C)

Examples of the organic solvents for use in the invention whose boiling point ranges from 100 to 200°C include n-butyl alcohol (b.p. 117°C, δ11.30), 2-methyl-1-propanol (b.p. 108°C, δ11.11*), 1-pentanol (b.p. 138°C, δ10.96*), 2-pentanol (b.p. 119°C, δ10.77*), 3-pentanol (b.p. 115°C, δ10.77*), 2-methyl-1-butanol (b.p. 129°C, δ10.77*), 3-methyl-1-butanol (b.p. 131°C, δ10.77*), 2-methyl-2-butanol (b.p. 102°C, δ10.58*), 3-methyl-2-butanol (b.p. 112°C, δ10.58*), 2,2-dimethyl-1-propanol (b.p. 113°C, δ10.58*), cyclohexanol (b.p. 161°C, δ12.44*), 1-hexanol (b.p. 157°C, δ10.68*), 2-methyl-1-pentanol (b.p. 148°C, δ10.51*), 2-methyl-2-pentanol (b.p. 121°C, δ10.34*), 4-methyl-2-pentanol (b.p. 132°C, δ10.34*), 2-ethyl-1-butanol (b.p. 147°C, δ10.51*), 1-methylcyclohexanol (b.p. 156°C, δ11.76*), 2-methylcyclohexanol (b.p. 168°C, δ11.74*), 3-methylcyclohexanol (b.p. 168°C, δ11.74*), 4-methylcyclohexanol (b.p. 171°C, δ11.74*), 1-octanol (b.p. 195°C, 810.28*) , 2-octanol (b.p. 180°C, δ10.14*), 2-ethyl-1-hexanol (b.p. 184°C, δ10.14*), dioxane (b.p. 101°C, δ10.0), butylether (b.p. 140°C, δ7.78*), phenyl ether (b.p. 187°C, δ12.16), isopentyl ether (b.p. 173°C, δ7.63*), diethoxyethane (b.p. 102°C, δ7.63*) , bis (2-methoxyethyl) ether (b.p. 160°C, δ8.10*), bis(2-ethoxyethyl)ether (b.p. 189°C, δ8.19*), cineole (b.p. 176°C, δ8. 97*) , benzyl ethyl ether (b.p. 185°C, δ9.20*), anisole (b.p. 154°C, δ9.38*), phenetole (b.p. 170°C, δ9.27*), acetal (b.p. 104°C, δ7.65*), 2-pentanone (b.p. 102°C, δ8.30*), 3-pentanone (b.p. 102°C, δ8.30*), cyclopentanone (b.p. 131°C, δ12.81*), cyclohexanone (b.p. 156°C, δ9.88), 2-hexanone (b.p. 128°C, 88.84*) , 4-methyl-2-pentanone (b.p. 117°C, δ8.68*), 2-heptanone (b.p. 151°C, δ8.84*), 2,4-dimethyl-3-pentanone (b.p. 125°C, 88.49), 2-octanone (b.p. 173°C, δ8.81*) , n-butyl acetate (b.p. 126°C, δ8.46) , isobutyl acetate (b.p. 126°C, δ8.42), sec-butyl acetate (b.p. 112°C, δ8.51*), pentyl acetate (b.p. 150°C, δ8.69*), isopentyl acetate (b.p. 142°C, δ8.52*), 3-methoxybutyl acetate (b.p. 173°C, δ8.52*), methyl butyrate (b.p. 102°C, δ8.72*), ethyl butyrate (b.p. 121°C, δ8. 70*) , methyl lactate (b.p. 145°C, δ12.42*), ethyl lactate (b.p. 155°C, δ10.57), butyl lactate (b.p. 185°C, δ11.26*) , 2-methoxy ethanol (b.p. 125°C, δ11.98*) , 2-ethoxy ethanol (b.p. 136°C, δ11.47*), 2-(methoxymethoxy)ethanol (b. p. 168°C, δ11.60*), 2-isopropoxy. ethanol (b.p. 142°C, δ10.92*), 1-methoxy-2-propanol (b.p. 120°C, δ11.27*), 1-ethoxy-2-propanol (b.p. 132°C, δ10.92*), dimethyl sulfoxide (b.p. 189°C, δ12.93), N-methylformamide (b.p. 185°C, δ12.93), N,N-dimethylformamide (b.p. 153°C, δ12.14), N,N-diethylformamide (b.p. 178°C, δ10.07*) and N, N-dimethylacetamide (b.p. 166°C, δ11.12). These may be used singly or in combination of two or more kinds.

In the above examples, the numbers represented by a delta δ are the solubility parameters (cal/mol)^{1/2}), and those followed by the symbol * are the values calculated by the Fedors method (R. F. Fedors, Polym. Eng. Sci., 14 [2] 147 (1974)).

In the invention, the organic solvent with 100 to 200°C boiling point preferably has a solubility parameter of 7.5 to 13 (cal/mol)^{1/2} and is other than hydrocarbon and halogenated hydrocarbon solvents.

Preferably, the organic solvent will have a boiling point of 110 to 150°C and a solubility parameter of 8.0 to 11.5 (cal/mol)^{1/2}. Also preferably, the organic solvent is a poor solvent for the electrolyte. The use of this organic solvent results in a paste composition that can give an electrode layer having a larger pore volume. Therefore, the diffusibility of the fuel and oxygen gases may be enhanced and the flooding of resulting water will be prevented, thus leading to improvement in generating performance.

### (Water-soluble organic solvent with a boiling point of less than 100°C)

The water-soluble organic solvent with a boiling point of less than 100°C may be exemplified with alcohols such as methanol, ethanol, n-propyl alcohol, 2-propanol, 2-methyl-2-propanol, 2-butanol and isobutyl alcohol; cyclic ethers such as furan, tetrahydrofuran and tetrahydropyran; and ketones such as acetone and methyl ethyl ketone. These may be used singly or in combination of two or more kinds.

### (Dispersant)

The paste composition may optionally contain a dispersant.

The dispersants employable in the invention include anionic surfactants such as sodium laurate, sodium stearate, sodium oleate, sodium lauryl sulfate, sodium cetyl sulfate, sodium stearyl sulfate, sodium oleyl sulfate, lauryl ether sulfate, sodium alkylbenzene sulfonate, oil-soluble alkylbenzene sulfonate, α-olefin sulfonate, disodium higher alcohol monophosphate, disodium higher alcohol diphosphate and zinc dialkyldithiophosphate;
cationic surfactants such as higher alkylamine salts, ethylene oxide adducts of higher alkylamine, 2-heptadecenyl-hydroxyethyl imidazoline, alkyltrimethylammonium salts, alkyldimethylbenzylammonium salts, alkylpyridinium salts and high-molecular weight polyester acid amide amine salts;
ampholytic surfactants such as sodium laurylaminopropionate, stearyl dimethyl betaine and lauryl dihydroxyethyl betaine; and
nonionic surfactants such as ethylene oxide adducts of higher alcohol, ethylene oxide adducts of alkylphenol, ethylene oxide adducts of fatty acid, ethylene oxide adducts of higher aliphatic amine, ethylene oxide adducts of fatty acid amide, ethylene oxide adducts of polypropylene glycol, fatty acid esters of glycerol, fatty acid esters of pentaerythritol, fatty acid esters of sorbitol, fatty acid esters of sorbitan, fatty acid esters of sugar and fatty acid alkanolamides. These may be used singly or in combination of two or more kinds. Of these, the basic surfactants are preferred and the basic polymeric surfactants are more preferred.

When the paste composition contains the dispersant, its storage stability further improves.

### (Carbon fiber)

The paste composition according to the invention may optionally contain a carbon fiber.

The carbon fibers employable in the invention include rayon carbon fibers, PAN carbon fibers, Ligunin-Poval carbon fibers, pitch carbon fibers and vapor grown carbon fibers. Of these, the vapor grown carbon fibers are preferable.

Containing the carbon fiber, the paste composition can give an electrode layer having a larger pore volume. Therefore, the diffusibility of the fuel and oxygen gases may be enhanced and the flooding of resulting water will be prevented, thus leading to improvement in generating performance.

### (Water)

Further, the paste composition according to the invention may optionally contain water.

Addition of water to the paste composition is effective to reduce the risk of heat generation and ignition.

### (Composition)

The paste composition according to the invention will contain:
1 to 20 wt%, preferably 3 to 10 wt%, of the carbon black supporting the hydrogen reduction catalyst;
1 to 30 wt%, preferably 1 to 15 wt%, of the electrolyte;
1 to 90 wt%, preferably 1 to 50 wt%, of the organic solvent with a boiling point of 100 to 200°C;
1 to 95 wt%, preferably 30 to 80 wt%, of the water-soluble organic solvent with a boiling point of less than 100°C;
0 to 10 wt%, preferably 0 to 2 wt%, of the optional dispersant;
0 to 20 wt%, preferably 1 to 10 wt%, of the optional carbon fiber; and
0 to 70 wt%, preferably 5 to 30 wt%, of the optional water.

When the amount of the carbon black supporting the hydrogen reduction catalyst falls below the aforesaid range, the electrode reactivity will be lowered, and when it exceeds the aforesaid range, the paste composition will be so viscous that the application produces irregular surfaces.

Amounts of the electrolyte less than the aforesaid range will lead to lowered proton conductivity. The electrolyte used in such an insufficient amount cannot work as a binder and thus the formation of electrode will fail. Also, when the electrolyte is used in amounts above the aforesaid range, the pore volume in the electrode will decrease.

When the organic solvent with a boiling point of 100 to 200°C is used in amounts within the aforesaid range, the resultant electrode can have an increased pore volume.

When the water-soluble organic solvent with a boiling point of less than 100°C is used in amounts within the aforesaid range, excellent coating properties can be obtained in the production of electrodes.

The use of dispersant in amounts of the aforesaid range will lead to the electrode paste having excellent storage stability.

When the carbon fiber is used in amounts less than the aforesaid range, the increase of pore volume of electrode will be insufficient. When the amount of carbon fiber exceeds the aforesaid range, the electrode reactivity will be lowered.

With the water used in amounts within the aforesaid range, the risk of heat generation and ignition during the paste production may be reduced.

### (Preparation of composition)

The paste composition according to the invention may be produced by mixing the aforesaid components in a predetermined proportion and kneading the mixture by a common procedure.

The addition sequence of the components is not particularly limited. For example, and preferably, all the components may be mixed together and stirred for a given time. Also preferably, all the components other than the dispersant may be mixed together and stirred for a given time, and the dispersant may be added according to necessity and the mixture may be stirred for a given time.

### (Application)

The paste composition may be applied on an electrode substrate or a proton conductive layer to form an electrode catalyst layer.

The application methods include brushing, brush coating, bar coating, knife coating, screen printing and spray coating. Alternatively, the paste composition may be applied on a substrate (transfer substrate) and thereafter the thus-formed electrode catalyst layer may be transferred onto an electrode substrate or a proton conductive layer. The transfer substrate may be a polytetrafluoroethylene (PTFE) sheet or a glass or metal plate whose surface has been treated with a releasing agent.

The electrode substrate for use in the invention is not particularly limited and may be selected from those electrode substrates generally used in fuel cells. Examples thereof include porous conductive sheets mainly composed of conductive substances. The conductive substances are, for example, calcined polyacrylonitriles, calcined pitches, carbon materials such as graphites and expanded graphites, stainless steel, molybdenum and titanium. The conductive substances may exist in the form of fibers or particles, but are not limited thereto. Fibrous conductive inorganic substances (inorganic conductive fibers), particularly carbon fibers, are preferable. The porous conductive sheets made of such inorganic conductive fibers may be woven or nonwoven fabrics. The woven fabrics may be, although not particularly limited to, plain fabrics, twill fabrics, satin fabrics, designed fabrics and figured fabrics. The nonwoven fabrics may be, although not particularly limited to, nonwoven fabrics obtained by papermaking methods, needle punched nonwoven fabrics, spunbonded nonwoven fabrics, water jet punched nonwoven fabrics and meltblown nonwoven fabrics. Knitted fabrics of inorganic conductive fibers are also usable as the porous conductive sheets.

These fabrics, particularly when composed of carbon fibers, are preferably woven fabrics obtained through carbonization or graphitization of plain fabrics of flame-resistant spun yarns, or nonwoven fabrics obtained through carbonization or graphitization of needle punched or water jet punched nonwoven fabrics of flame-resistant yarns, or nonwoven mats obtained by papermaking technique for flame-resistant yarns, carbonized yarns or graphitized yarns. As the carbon paper, carbon paper TGP series and SO series (available from Toray Industries, Inc.) and carbon cloths produced by E-TEK may be preferably used.

According to a preferred embodiment of the invention, conductive particles such as carbon blacks, or conductive fibers such as carbon fibers may be incorporated in the porous conductive sheet used in the invention. The incorporation is advantageous in that such conductive materials play an auxiliary roll to provide a higher conductivity.

### EXAMPLES

The present invention will be hereinafter described in detail by the following Examples, but it should be construed that the invention is in no way limited to those Examples.

### [Example 1]

### [Preparation of paste A]

A 50 ml glass bottle was charged with:
25 g of zirconia balls having 10 mm diameter (trade name: YTZ balls, available from Nikkato Corporation);
1.68 g of platinum-supporting carbon particles (Pt content: 46 wt%);
2.55 g of distilled water;
6.14 g of a water-alcohol solution containing 20.6 wt% Nafion (trade name, available from Dupont) (water:alcohol weight ratio = 20:60);
9.14 g of n-propyl alcohol;
4.3 g of n-butyl alcohol as the organic solvent of 100-200°C boiling point;
0.46 g of a vapor grown carbon fiber (trade name: VGCF, available from Showa Denko K.K.); and
0.036 g of a dispersant (trade name: DA234, available from Kusumoto Chemicals, Ltd.).

The above water-alcohol solution of Nafion contained ethanol and n-propyl alcohol as the alcohols.

The contents were stirred with a wave rotor for 70 minutes to give a paste A having a viscosity of 70 cp (25°C).

### [Evaluation]

The paste A was applied on carbon paper in a platinum amount of 0.5 mg/cm² with use of a doctor blade. The resultant coating was dried at 95°C for 10 minutes to form an electrode layer, which was then measured for the following properties. The results are shown in Tables 1 and 2.

### (Measurements of pore distribution and pore volume)

The pore distribution and pore volume of the electrode layer were measured by a mercury penetration method using a mercury porosimeter.

### (Production of fuel cell and evaluation of its properties)

A 35 µm Nafion^{™} membrane was sandwiched between two electrode layers and they were hot-pressed together at 160°C and a pressure of 40 kg/cm² for 15 minutes to form an electrode-membrane assembly. Thereafter, the assembly was sandwiched between two titanium collectors, and a respective heater was provided outside each of the collectors. Thus, a fuel cell having an effective area of 25 cm² was prepared.

The temperature of the fuel cell was maintained at 50°C, and hydrogen and oxygen were supplied thereto at 90% or more relative humidity and 2 atmospheric pressure. Under these conditions, the voltage between the terminals was measured at a current density of 0.5 A/cm² and 1.0 A/cm².

Separately, the temperature of the fuel cell was maintained at 80°C, and hydrogen and oxygen were supplied thereto at 90% or more relative humidity and 2 atmospheric pressure. Under these conditions, the voltage between the terminals was measured at a current density of 0.5 A/cm² and 1.0 A/cm².

### (Evaluation of storage stability of electrode paste composition)

The electrode paste composition was placed in a 20 cc glass bottle and allowed to stand at room temperature for a week. The upper and lower portions of the electrode paste were collected each in an amount of 0.5 cc, and dried on a hot plate at 95°C for 10 minutes. Difference in solid concentration between the upper and lower portions was analyzed to evaluate for the particle sedimentation.

### [Evaluation Criteria]

AA: No difference in solid concentration between the upper and lower portions
BB: Higher solid concentration in the lower portion than in the upper portion

### [Example 2]

### [Preparation of paste B]

A 50 ml glass bottle was charged with:
25 g of zirconia balls having 10 mm diameter (trade name: YTZ balls, available from Nikkato Corporation);
1.68 g of platinum-supporting carbon particles (Pt content: 46 wt%);
2.55 g of distilled water;
6.14 g of a water-alcohol solution containing 20.6 wt% Nafion (trade name, available from Dupont) (water:alcohol weight ratio = 20:60);
9.14 g of n-propyl alcohol;
13.3 g of n-butyl acetate as the organic solvent of 100-200°C boiling point; and
0.46 g of a vapor grown carbon fiber (trade name: VGCF, available from Showa Denko K.K.).

The above water-alcohol solution of Nafion contained ethanol and n-propyl alcohol as the alcohols.

When these components had been stirred with a wave rotor for 30 minutes, 0.036 g of a dispersant (trade name: DA234, available from Kusumoto Chemicals, Ltd.) was added. The mixture was further stirred by the wave rotor for 40 minutes to give a paste B having a viscosity of 15 cp (25°C).

### [Evaluation]

Electrodes and a fuel cell were produced by the procedure illustrated in Example 1 except that the paste B was used in place of the paste A. The properties were evaluated as described above. The results are shown in Tables 1 and 2.

### [Example 3]

### [Preparation of paste C]

A paste C having a viscosity of 60 cp (25°C) was prepared by the procedure illustrated in Example 1 except that n-butyl alcohol was replaced with 4.3 g of 1-ethoxy-2-propyl alcohol.

### [Evaluation]

Electrodes and a fuel cell were produced by the procedure illustrated in Example 1 except that the paste C was used in place of the paste A. The properties were evaluated as described above. The results are shown in Tables 1 and 2.

### [Comparative Example 1]

### [Preparation of paste D]

A 50 ml glass bottle was charged with:
25 g of zirconia balls having 10 mm diameter (trade name: YTZ balls, available from Nikkato Corporation);
1.68 g of platinum-supporting carbon particles (Pt content: 46 wt%);
2.55 g of distilled water;
6.14 g of a water-alcohol solution containing 20.6 wt% Nafion (trade name, available from Dupont) (water:alcohol weight ratio = 20:60);
13.4 g of n-propyl alcohol;
0.46 g of a vapor grown carbon fiber (trade name: VGCF, available from Showa Denko K.K.); and
0.036 g of a dispersant (trade name: DA234, available from Kusumoto Chemicals, Ltd.).

The above water-alcohol solution of Nafion contained ethanol and n-propyl alcohol as the alcohols.

The contents were stirred with a wave rotor for 70 minutes to give a paste D having a viscosity of 65 cp (25°C).

### [Evaluation]

Electrodes and a fuel cell were produced by the procedure illustrated in Example 1 except that the paste D was used in place of the paste A. The properties were evaluated as described above. The results are shown in Tables 1 and 2.

### [Comparative Example 2]

### [Preparation of paste E]

A paste E having a viscosity of 30 cp (25°C) was prepared by the procedure illustrated in Example 1 except that n-butyl alcohol was replaced with 9.9 g of ethyl acetate.

### [Evaluation]

Electrodes and a fuel cell were produced by the procedure illustrated in Example 1 except that the paste E was used in place of the paste A. The properties were evaluated as described above. The results are shown in Tables 1 and 2.

### [Comparative Example 3]

### [Preparation of paste F]

A paste F having a viscosity of 75 cp (25°C) was prepared by the procedure illustrated in Example 1 except that n-butyl alcohol was replaced with 4.3 g of cyclohexane.

### [Evaluation]

Electrodes and a fuel cell were produced by the procedure illustrated in Example 1 except that the paste F was used in place of the paste A. The properties were evaluated as described above. The results are shown in Tables 1 and 2.

### [Comparative Example 4]

### [Preparation of paste G]

A 50 ml glass bottle was charged with:
25 g of zirconia balls having 10 mm diameter (trade name: YTZ balls, available from Nikkato Corporation);
1.68 g of platinum-supporting carbon particles (Pt content: 46 wt%);
2.55 g of distilled water;
6.14 g of a water-alcohol solution containing 20.6 wt% Nafion (trade name, available from Dupont) (water:alcohol weight ratio = 20:60);
13.4 g of n-propyl alcohol; and
0.46 g of a vapor grown carbon fiber (trade name: VGCF, available from Showa Denko K.K.).

The above water-alcohol solution of Nafion contained ethanol and n-propyl alcohol as the alcohols.

The contents were stirred with a wave rotor for 70 minutes to give a paste G having a viscosity of 550 cp (25°C) .

### [Evaluation]

Electrodes and a fuel cell were produced by the procedure illustrated in Example 1 except that the paste G was used in place of the paste A. The properties were evaluated as described above. The results are shown in Tables 1 and 2.

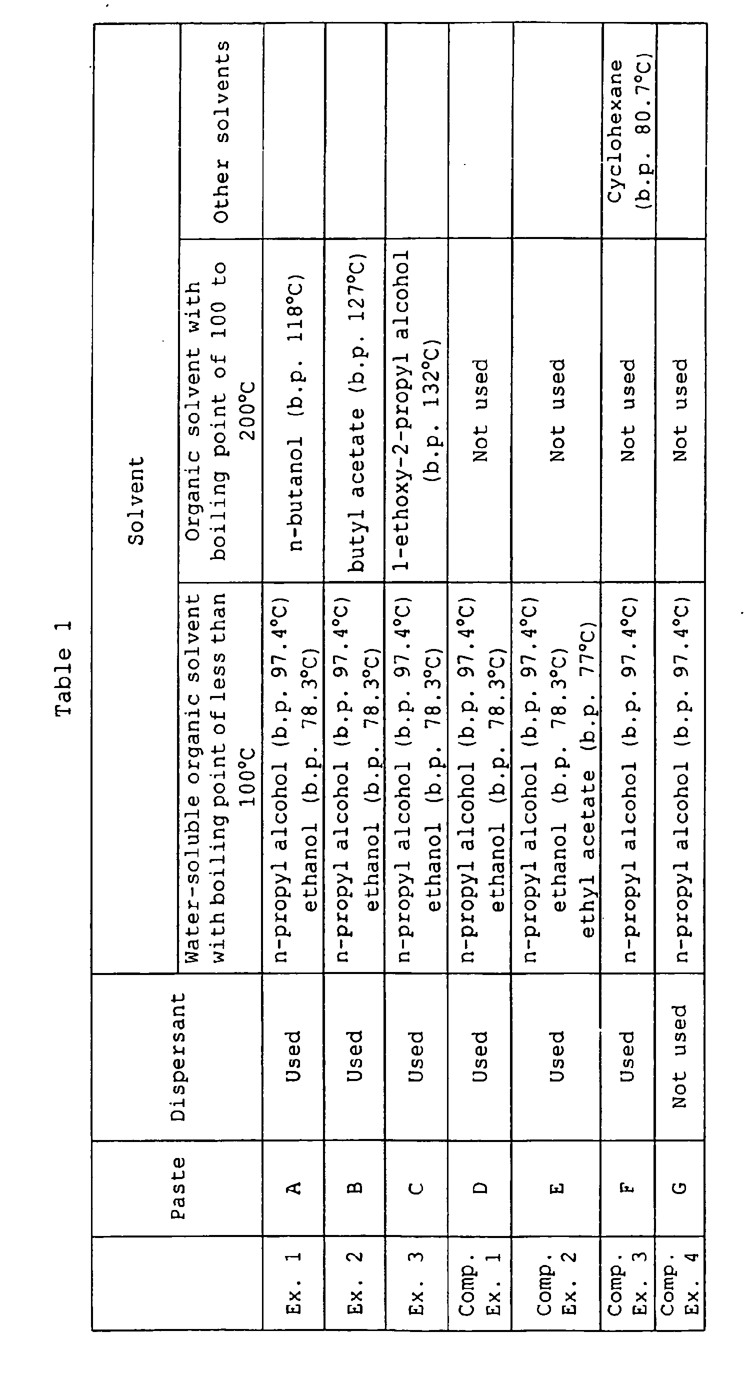

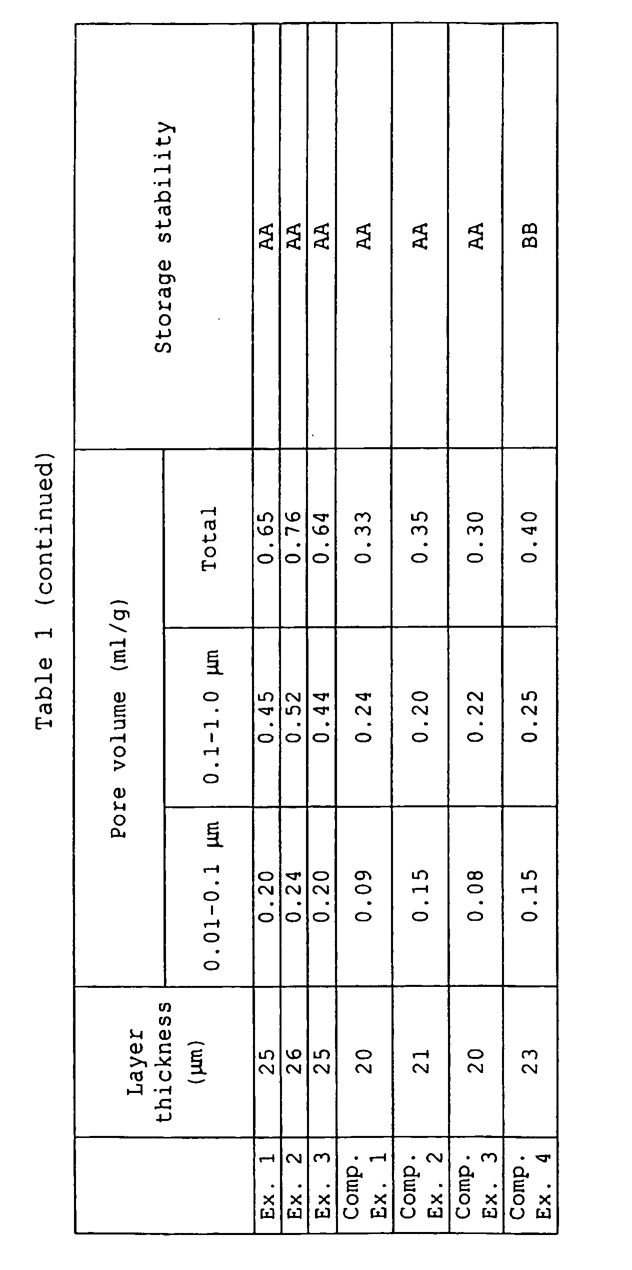

**Table 2**

| Temperature and humidity | | Low temperature and high humidity (50°C and 90% or more RH) | | High temperature and high humidity (80°C and 90% or more RH) | |
|---|---|---|---|---|---|
| Current density (A/cm²) | | 0.5 | 1.0 | 0.5 | 1.0 |
| Voltage between the terminals (V) | Ex. 1 | 0.68 | 0.49 | 0.72 | 0.58 |
| | Ex. 2 | 0.70 | 0.50 | 0.75 | 0.62 |
| | Ex. 3 | 0.65 | 0.45 | 0.71 | 0.55 |
| | Comp. Ex. 1 | 0.32 | - | 0.40 | - |
| | Comp. Ex. 2 | 0.41 | - | 0.49 | - |
| | Comp. Ex. 3 | 0.33 | - | 0.38 | - |
| | Comp. Ex. 4 | 0.45 | 0.25 | 0.53 | 0.32 |

| | | | | | |
|---|---|---|---|---|---|
| -: Unmeasurable due to the current density less than 1 A/cm² | | | | | |

### EFFECT OF THE INVENTION

The electrode catalyst paste composition according to the invention contains an organic solvent having a boiling point of 100 to 200°C so that the solvent of the paste composition can evaporate at a controlled rate under drying conditions in the production of electrodes. Therefore, the conventional problem of insufficient pore volume attributed to the containing of dispersant may be solved. As a result, the electrode paste composition of the invention can allow for an increased pore volume in the resultant electrode even when it contains a dispersant for higher storage stability. Accordingly, the contact between the gases and the catalyst can take place favorably and the flooding of resulting water can be prevented. Thus, the generating performance may be enhanced.

The invention provides an electrode paste composition that enables a sufficient pore volume of electrode for high generating performance while maintaining good storage stability. The paste composition comprises a carbon black supporting a hydrogen reduction catalyst, an electrolyte, an organic solvent having a boiling point of 100 to 200°C, a water-soluble organic solvent having a boiling point of less than 100°C, and optionally one or more components selected from a dispersant, a carbon fiber and water.

## Claims

1. A paste composition for making electrodes, comprising 1 to 20 wt.-% of a carbon black supporting a hydrogen reduction catalyst, 1 to 30 wt.-% of an electrolyte, 1 to 50 wt.-% of an organic solvent with a boiling point of 100 to 200°C, and 30 to 80 wt.-% of a water-soluble organic solvent with a boiling point of less than 100°C.

2. The paste composition according to claim 1, wherein the organic solvent with a boiling point of 100 to 200°C has a solubility parameter of 7.5 to 13 (cal/mol)^{1/2} and is other than hydrocarbon and halogenated hydrocarbon solvents.

3. The paste composition according to claim 1 or 2, further containing a dispersant.

4. The paste composition according to any one of claims 1 to 3, further containing a carbon fiber.

5. The paste composition according to any one of claims 1 to 4, further containing water.

6. The paste composition according to claim 4, wherein the carbon fiber is contained in the amount of 1 to 10 wt.-%.

## Patentansprüche

1. Pastezusammensetzung zum Herstellen von Elektroden, umfassend 1 bis 20 Gew.-% eines Kohleschwarz, das einen Wasserstoff-Reduktionskatalysator trägt, 1 bis 30 Gew.-% eines Elektrolyten, 1 bis 50 Gew.-% eines organischen Lösungsmittels mit einem Siedepunkt von 100 bis 200 °C und 30 bis 80 Gew.-% eines wasserlöslichen organischen Lösungsmittels mit einem Siedepunkt von weniger als 100 °C.

2. Pastezusammensetzung nach Anspruch 1, worin das organische Lösungsmittel mit einem Siedepunkt von 100 bis 200 °C einen Löslichkeitsparameter von 7,5 bis 13 (cal/mol)^{1/2} hat und verschieden von Kohlenwasserstoff- und halogenierten Kohlenwasserstofflösungsmitteln ist.

3. Pastezusammensetzung nach Anspruch 1 oder 2, weiterhin enthaltend ein Dispergiermittel.

4. Pastezusammensetzung nach einem der Ansprüche 1 bis 3, weiterhin enthaltend eine Kohlefaser.

5. Pastezusammensetzung nach einem der Ansprüche 1 bis 4, weiterhin enthaltend Wasser.

6. Pastezusammensetzung nach Anspruch 4, worin die Kohlefaser in der Menge von 1 bis 10 Gew.-% enthalten ist.

## Revendications

1. Composition de pâte pour fabriquer des électrodes, comprenant de 1 à 20% en poids d'un noir de carbone supportant un catalyseur de réduction d'hydrogène, de 1 à 30% en poids d'un électrolyte, de 1 à 50% en poids d'un solvant organique ayant un point d'ébullition de 100 à 200 °C, et de 30 à 80% en poids d'un solvant organique soluble dans l'eau ayant un point d'ébullition inférieur à 100 °C.

2. Composition de pâte selon la revendication 1, dans laquelle le solvant organique ayant un point d'ébullition de 100 à 200 °C a un paramètre de solubilité de 7,5 à 13 (cal/mol) 1/2 et est différent des solvants hydrocarbonés et des solvants hydrocarbonés halogénés.

3. Composition de pâte selon la revendication 1 ou 2, contenant en outre un dispersant.

4. Composition de pâte selon l'une quelconque des revendications 1 à 3, contenant en outre une fibre de carbone.

5. Composition de pâte selon l'une quelconque des revendications 1 à 4, contenant en outre de l'eau.

6. Composition de pâte selon la revendication 4, dans laquelle la fibre de carbone est contenue en une quantité de 1 à 10% en poids.
